# EUROPEAN PATENT APPLICATION

(11) **EP 1 806 885 A1**
(43) Date of publication of application: **11.07.2007**
(21) Application number: 06290038.6
(22) Date of filing: 05.01.2006
(51) Int. Cl.: H04L 12/58

(54) **Electronic messaging management method and system**

(71) Applicant: Alcatel Lucent, 75008 Paris (FR)
(72) Inventor: Handekyn, Koen, 9080 Lochristi (BE); Brackx, Michaël Frederick François Albert, 9000 Gent (BE)
(74) Representative: Narmon, Gisèle Marie Thérèse

(57) **Abstract**

The present invention relates to a method for managing Electronic messages and a related system wherein at least one electronic message is forwarded from an electronic messaging source of a plurality of electronic messaging sources (ADS,...ADSx) towards at least one terminal of at least one corresponding user of a plurality of terminals of corresponding users (U1,Ux) through a communications network (CN). The at least one electronic messaging source of the plurality of electronic messaging sources sends at least one electronic message towards the at least one terminal of said at least one corresponding user. The terminal of the first user and terminals of users related to said first user send electronic message block preferences towards a community interest management module (CIMM) where the community interest management module determines community message block preferences based on the electronic message block preferences of the first user and the electronic message block preferences of the users related to the first user.

## Description

The present invention relates to a method for electronic messaging management as described in the preamble of claim 1 and the related the terminal as described in the preamble of claim 4.

Such a method and related devices are generally known in the art.

Such a method may consist of a personalized electronic message blocking step wherein the electronic message blocking system learns from the user if an electronic message should be blocked or not. This method for instance is applied in Norton Internet security application. Alternatively, such a method may consist of general electronic message blocking step wherein the electronic message blocking system is configured based on settings that are the same for all users within a system. Here a common list of hostnames is applied for each of the users for blocking incoming electronic messages.

In these ways it is currently possible to block all (or at least as much as possible) electronic messages. It is also possible to configure the electronic message blocking system based on your own personal settings, but this takes time and is very repetitive.

An object of the present invention is to provide an electronic message management method of the above known type and a related device but wherein the electronic message management method is better suited to the electronic message blocking needs of a user of such a method and related devices.

According to the invention, this object is achieved by the method as described in claim 1, the terminal as described as described in claim 4, the community interest management module according to claim 5 and the electronic message blocking module as described in claim 8.

In this way, by a terminal of a first user and terminals of users related to the first user, where the users related to the first users may be buddies of the first user, sending electronic message block preferences towards a community interest management module, where the community interest management module collects the electronic message block preferences of the first user and electronic message block preferences of the users related to this first user and based thereupon generates the community blocking preferences which constitute an improved basis for blocking electronic messages destined to the first user, as not only electronic messages indicated to be blocked by the first user but additionally electronic messages are indicated to be blocked by users which are related to the first user. In this way, these related users, which may be buddies of the first user, enrich the blocking preferences of the first user with their own blocking preferences as the related users are expected to have common interests.

The preferences may for instance include keywords based on which a user may want to block messages or may contain source addresses of a source to be blocked or a combination thereof. An electronic message may be an advertisement, an e-mail, a multimedia message, etc.

Another characteristic feature of the present invention is described in claim 2 and claim 7.

A blocking module, subsequently blocks electronic messages sent from the at least one electronic messaging source towards the terminal of the first user, based on community electronic message block preferences obtained from the electronic message block preferences of the first user and the electronic message block preferences of users related to the first user.

Another characteristic feature of the present invention is described in claim 3 and claim 6

The blocking additionally is based on at least one decision rule, said at least one decision rule determining whether or not to apply said community electronic message block preferences. This decision rule may be applied for weighing the preferences of the related users and based on the weight taking the preferences of these related persons into account... In other words the decision rule may indicate how individual preferences are applied in order to obtain the community preferences.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a communications network wherein the present invention is implemented;
Fig. 2 represents the functional representation of each of the network elements as presented in Fig. 1.

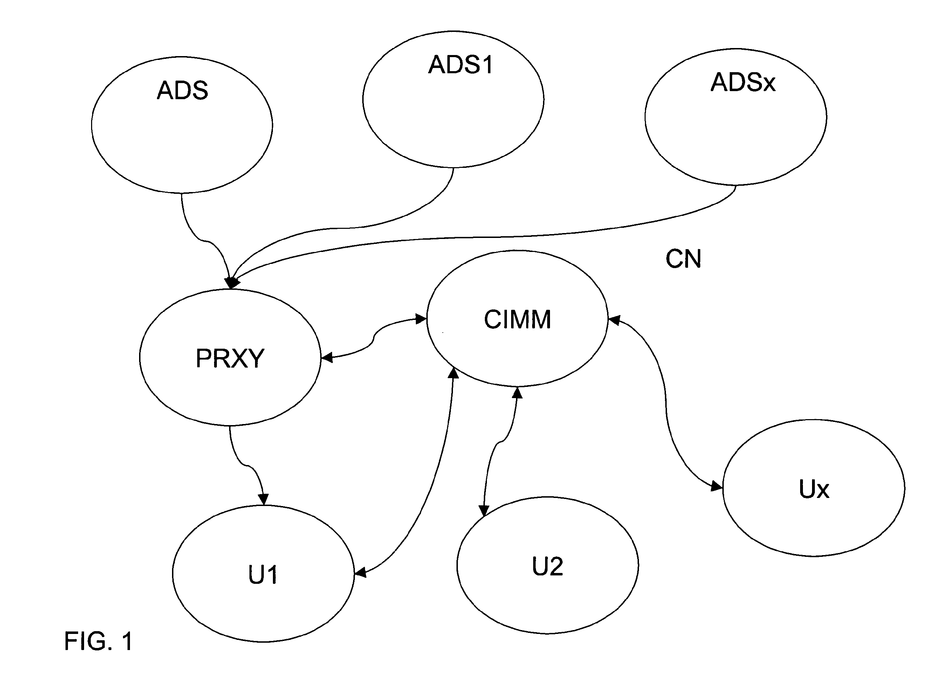

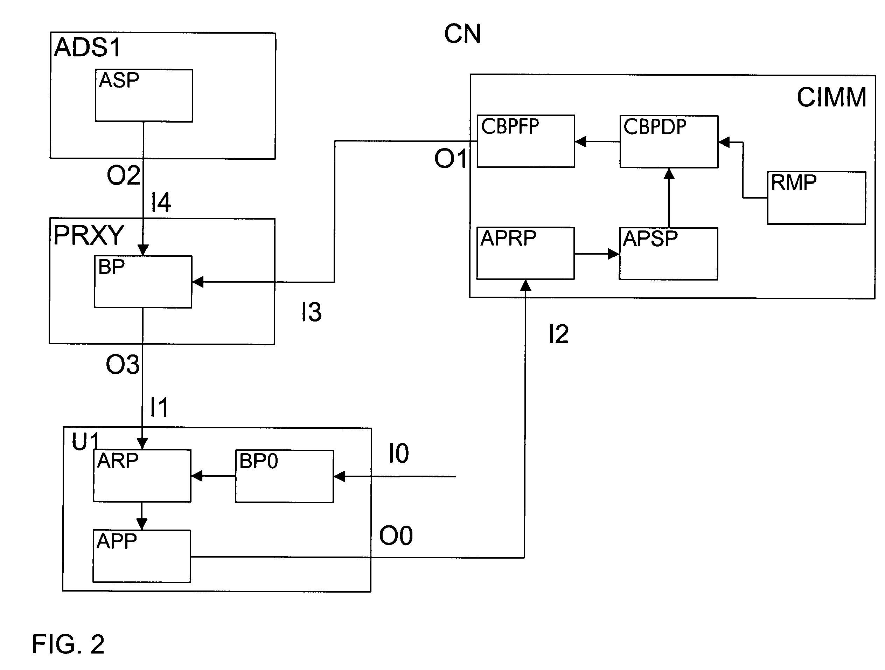

In the following paragraphs, referring to the drawings, an implementation of the electronic message management method in the communications network CN, the present invention will be described. In the first paragraph of this description the main elements of the communications network CN as presented in FIG. 1 are described. In the second paragraph, all connections between the before mentioned elements and described means are defined. Subsequently all relevant functional means of the mentioned communications network as presented in FIG.2 are described followed by a description of all interconnections. In the succeeding paragraph the actual execution of the method for session establishment is described.

The essential elements of the communications network as presented in Fig. 1 are electronic messaging sources such as advertisement sources ADS..ADSx that are able to send advertisements with respect to a certain subject towards terminals of corresponding users, of a plurality of terminals each terminal relating to a certain user. The communications network CN further comprises a community interest management module CIMM that is able to determine community message block preferences based on electronic messages block preferences of the first user U1 and the block preferences of the users related to the first user, possibly in combination with at least one decision rule which is related to the first user. Furthermore, the communications network CN comprises an electronic message blocking module PRXY that is able to block electronic messages sent by an electronic messaging source, such as advertisement sources ADS...ADSx based on the determined community message block preferences.

Each of the previously mentioned devices and/or network elements is coupled over the communications network CN. The communications network CN in turn may comprise several access networks and or home networks all intercoupled via a core network such as the Internet or a private service provider network. Any other suitable combination of networks may be applied as well.

The Terminal U1 comprises an electronic message reception part ARP that is able to at least one receive electronic messages, such as an advertisement, sent by at least one electronic messaging source of the plurality of electronic messaging sources and an electronic message block preference processing part APP that is adapted to determine an electronic message block preference and forward the electronic message block preference towards a community interest management module CIMM. The terminal of the prior art may comprise a blocking part BPO adapted to block electronic messages sent by any of the electronic messages sources only if the user of the terminal indicated to do so. This blocking part BPO may comprise a list of user generated electronic messages to be blocked in a personal user profile or even a pre-configured general list of electronic messages to be blocked which also may be stored in a user profile.

The electronic message reception part ARP has an input-terminal that is at the same time an input-terminal I1 of the terminal U1. The electronic message reception part ARP further is coupled with an output to an input of the electronic message block preference processing part APP that in turn has an output-terminal that is at the same time an output-terminal 00 of the terminal U1.

The blocking part BPO has an has an input-terminal that is at the same time an input-terminal 10 of the terminal U1 and in turn is coupled with an output to an input of the. Electronic message reception part ARP.

Any of the terminals U2 ..Ux have the same structure as terminal U1.

Any of the terminals U1..Ux may incorporate the Electronic message Blocking module PRXY. The Electronic message Blocking module PRXY may alternatively be implemented on any network element on the path between the electronic messaging source and the receiving terminal.

The Community interest management module CIMM comprises an electronic message block preferences reception part APRP that is able to receive the electronic message block preferences from the terminal of the first user and additionally from the terminals of users related to the first user and an electronic message block preferences storing part APSP able to store the electronic message block preferences from the terminal of the first user and from terminals of users related to the first user. The Community interest management module CIMM further comprises a rules managing part RMP that is able to keep decision rules for each user of the plurality of users, a community electronic message block determination part CBPDP, that is adapted to determine community electronic message block preferences based on electronic messages block preferences of the first user and the users related to said first user, possibly in combination with the at least one decision rule related to said first user and a community electronic message block preferences forwarding part CBPFP that is adapted to forward the community electronic message block preferences towards a blocking module PRXY.

The electronic message block preferences reception part APRP has an input-terminal that is at the same time an input-terminal 12 of the Community interest management module CIMM. The electronic message block preferences reception part APRP is further coupled with an output to an input of the electronic message block preferences storing part APSP that in turn is coupled with an output to an input of the community electronic message block determination part CBPDP. The community electronic message block determination part CBPDP has a further input that is coupled to an output of the rules managing part RMP. The community electronic message block determination part CBPDP further has an output that is coupled to an input of the community electronic message block preferences forwarding part CBPFP that in turn has an output-terminal that is coupled to an output-terminal O1 of the Community interest management module CIMM. The Electronic message Blocking module PRXY comprises a blocking part BP, that is adapted to block the electronic messages, such as advertisements sent towards the terminal of the first user by at least one electronic messaging source, such as an advertisement source ADS1 based on community electronic message block preferences based on electronic messages block preferences of the first user and electronic message block preferences of the users related to the first user in combination with certain decision rules

The blocking part BP has an input-terminal that is at the same time an input-terminal 14 of the Electronic message Blocking module PRXY. The blocking part BP further has an output-terminal that is at the same time an output-terminal 03 of the Electronic message Blocking module PRXY.

The electronic messaging source ADS comprises an electronic message sending part ASP that is able to send electronic messages to at least one terminal of at least one corresponding user U1 ..Ux.

The electronic message sending part ASP has an output-terminal that is at the same time an output-terminal 04 of the Electronic messaging source ADS.

Any of the ADS..ADSx have the same structure as Electronic messaging source ADS.

In order to explain the working of the present invention it is supposed that upon reception of an electronic message, for instance an advertisement, from an electronic messaging source ADS1 by the electronic message reception part ARP, and forwarding of the received electronic message to the electronic message block preference processing part APP, during the subsequent processing of the received electronic message by the electronic message block preference processing part APP it is determined amongst others based on a user input that the received electronic message is an advertisement from an electronic messaging source that should be blocked. The electronic message block preference processing part APP subsequently forwards an electronic message block preference including at least one electronic messaging source ADS1 to be blocked, towards a community interest management module CIMM. The electronic message block preferences reception part APRP of the Community interest management module CIMM subsequently receives the electronic message block preferences from the terminal of the first user and the electronic message block preferences from terminals of users related to the first user, for instance from buddies U2, U3 and U4 which may be users having a common interest. The electronic message block preferences storing part APSP stores the electronic message block preferences from the terminal of the first user and from the terminals of users related to the first user. The users related to the first user may be the buddies of the first user.

Furthermore, the electronic message block preferences of the first user may comprise source addresses, keywords characterising the subject and content of the to be blocked electronic messages, and the electronic message block preferences of the related users may comprise different sources and keywords and subjects.

The rules managing part RMP, keeps at least one decision rule for each user of said plurality of users. Such a decision rule may be that in case a certain percentage of the buddies of the first user determine that a certain electronic messaging source must be blocked because this source does not send electronic messages, for instance advertisements, interesting for these users. Another decision rule may be that a source is blocked as soon as 1 buddy blocks one message of that source.

The community electronic message block determination part CBPDP determines a community electronic message block preference based on the electronic messages block preferences of the first user and the block preferences of the users related to the first user, i.e. the buddies of the first user U2, U3 and U4, in combination with the decision rule related to the first user, which here may be blocking of a certain electronic messaging source ADS1, if 60 percent of the buddies including the first user that indicate that electronic messaging source ADS1 sends no interesting electronic messages. It is assumed that the majority of the buddies of the first user, for instance 70% of the buddies indeed indicate that electronic messaging source does not send interesting electronic messages. Hence the community electronic message block determination part CBPDP decides to advise that electronic messaging source ADS1 should be blocked for the first user. The community message block preferences forwarding part CBPFP forwards the community electronic message block preferences towards a blocking module PRXY

The blocking part BP, at reception of the community electronic message block preferences including that all electronic messages of electronic messaging source ADS1 have to be blocked for the first user, blocks any electronic message sent towards the terminal of the first user by the electronic messaging source ADS1. This is based on community message block preferences including amongst others that all electronic messages of electronic messaging source ADS1 has to be blocked for the first user.

This electronic message management system may be applied in an spam filtering context wherein some contributions of some spam sources may be blocked by a first user based on the blocking preferences of a group users related to the first use.
Although this electronic message management system is described for examples like advertisement- and-spam blocking, such an electronic message management system may also be applied in a personal broadcast system wherein some contributions of some broadcasters may be blocked by a first user based on the blocking preferences of a group users related to the first user.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method for managing Electronic messages, said electronic messages being forwarded from an electronic messaging source (ADS) of a plurality of electronic messaging sources (ADS...ADSx) towards at least one terminal of at least one corresponding user of a plurality of terminals of corresponding users (U1....Ux) through a communications network, (CN) said method comprising the steps of:
a. at least one electronic messaging source of said plurality of electronic messaging sources sending said at least one electronic message towards said at least one terminal of said at least one corresponding user, **CHARACTERISED IN THAT** said method further comprises the steps of:
b. a terminal of a first user and terminals of users related to said first user sending electronic message block preferences towards a community interest management module; and
c. said community interest management module determining community electronic message block preferences based on said electronic message block preferences of said first user and said electronic message block preferences of said users related to said first user.

2. Method for managing Electronic messages according to claim 1, **CHARACTERISED IN THAT** said method further comprises the step of a blocking module, blocking said at least one electronic message sent from said at least electronic messaging source (ADS) towards said terminal of said first user, based on said community message block preferences of said first user and said users related to said user.

3. Method for managing Electronic messages according to claim 2, **CHARACTERISED IN THAT** said blocking additionally is based on at least one decision rule, said at least one decision rule determining whether or not to apply said community electronic message block preferences.

4. Terminal of a first user for use in a communications network (CN) comprising a plurality of advertisement sources (ADS...ADSx) and a plurality of said terminals of users (U1....Ux), said at least one advertisement source being adapted to forward at least one electronic message towards said terminal of said first user, said terminal comprising:
a. an electronic message reception part (ARP), adapted to receive said at least one electronic messages forwarded by at least one electronic messaging source of said plurality of electronic messaging sources, **CHARACTERISED IN THAT** said terminal further comprises,
b. an electronic message block preference processing part (APP) adapted to determine an electronic message block preference and forward said electronic message block preference towards a community interest management module (CIMM).

5. Community interest management module (CIMM), for use in a communications network (CN) comprising a plurality of electronic messaging sources (ADS...ADSx) and a plurality of said terminals of users (U1....Ux), said at least one electronic messaging source being adapted to forward electronic messages towards a terminal of a first user, said Community interest management module (CIMM) comprises:
a. an electronic message block preferences reception part (APRP), adapted to receive said electronic message block preferences from said terminal of said first user and electronic message block preferences from terminals of users related to said first user; and
b. a community message block determination part (CBPDP), adapted to determine community message block preferences based on electronic messages block preferences of said first user and on electronic message block preferences of said users related to said first user.

6. Community interest management module (CIMM) according to claim 5, **CHARACTERISED IN THAT** said Community interest management module (CIMM) further comprises a rules managing part (RMP), adapted to keep at least one decision rule for each user of said plurality of users and **in that** said community message block determination part (CBPDP) further is adapted to determine said community message block preferences additionally on said at least one decision rule related to said first user.

7. Community interest management module (CIMM) according to claim 5 or 6, **CHARACTERISED IN THAT** said communications network comprises an electronic message blocking module (PRXY) that is adapted to block electronic messages sent by an electronic messaging source (ADS...ADSx) based on the determined community message block preferences and that said Community interest management module (CIMM) further comprises a community message block preferences forwarding part (CBPFP) adapted to forward said community message block preferences towards said electronic message blocking module (PRXY).

8. Electronic message Blocking module (PRXY), for use in a communications network (CN) comprising a plurality of electronic messaging sources and a plurality of said terminals of users (U1....Ux), said at least one electronic messaging source being adapted to forward at least one electronic message towards said terminal of a first user, **CHARACTERISED IN THAT** said electronic message Blocking module (PRXY) is located on a path between said at least one advertisement source and said first user, said electronic message Blocking module (PRXY) comprises a blocking part (BP), that is adapted to block said at least one electronic message sent towards said terminal of said first user by at least one electronic messaging source based on community electronic message block preferences based on electronic messages block preferences of said first user and on block preferences of said users related to said first user, possibly in combination with certain rules.

9. Electronic message Blocking module (PRXY), according to claim 8, **CHARACTERISED IN THAT** said Electronic message Blocking module (PRXY) is applied in a terminal as claimed in claim 4.
